# EUROPÄISCHE PATENTSCHRIFT

(11) **EP 1 110 795 B1**
(45) Veröffentlichungstag und Bekanntmachung des Hinweises auf die Patenterteilung: **11.03.2009**
(21) Anmeldenummer: 00125843.3
(22) Anmeldetag: 25.11.2000
(51) Int. Cl.: B60K 35/00, G06F 3/033

(54) **Verfahren zum Wechseln von Auswahlmenüs in Fahrzeugen und Vorrichtung zur Durchführung des Verfahrens**
Method and device of changing menus in vehicles
Méthode et dispositif de changement de menus dans des véhicules

(30) Priorität: 22.12.1999 DE 19962213
(43) Veröffentlichungstag der Anmeldung: 27.06.2001
(73) Patentinhaber: Bayerische Motoren Werke Aktiengesellschaft, 80809 München (DE)
(72) Erfinder: Künzner, Herrmann, 85356 Freising (DE)

(56) Entgegenhaltungen:
- EP-A- 0 703 111
- EP-A- 0 854 798
- WO-A-99/27435
- DE-C- 4 338 171
- GRUDIN J: "THE CASE AGAINST USER INTERFACE CONSISTENCY" , COMMUNICATIONS OF THE ASSOCIATION FOR COMPUTING MACHINERY, ASSOCIATION FOR COMPUTING MACHINERY. NEW YORK, US, VOL. 32, NR. 10, PAGE(S) 1164-1173 XP000072102 ISSN: 0001-0782 * Seite 1168, Zeile 7 - Zeile 15 *

## Beschreibung

Die Erfindung bezieht sich auf ein Verfahren den Merkmalen des Oberbegriffs von Patentanspruch 1 sowie auf eine Vorrichtung zur Durchführung eines derartigen Verfahrens.

Dokument WO99/27435, das als nächstliegender Stand der Technik betrachtet wird, offenbart ein Verfahren mit den Merkmalen des Oberbegriffs von Anspruch 1.

Ein derartiges Verfahren Vorrichtung ist aus der EP 0 366 555 A bekannt. Dabei dient ein als Druck-Drehknopf ausgebildetes Betätigungsglied dazu, den jeweils gewünschten Punkt eine Auswahlmenüs durch eine Drehbewegung anzuwählen und durch eine Axialbewegung einzustellen. Der Wechsel zu einem Menüpunkt eines anderen Auswahlmenü erfordert eine Bewegung innerhalb des ursprünglichen Menüs bis hinauf zu der Menü-Auswahlebene, den anschließenden Menüwechsel und dann innerhalb des dann eingestellten Menüs den "Abstieg" bis hin zu dem gewünschten Menüpunkt.

Die EP 0701 926 A zeigt für ein weiteres verfahren der eingangs genannten Art demgegenüber eine Verbesserung. Dabei ist es möglich, durch Betätigen von Einzelschaltern, die jedem Menü individuell zugeordnet sind, von einem Menü zum anderen zu wechseln. Dort sind für einige oft benutzte Menüpunkte bzw. solche Menüpunkte einer Funktionsgruppe, die auch bei nicht direkter Anwahl der Funktionsgruppe zur Anwendung kommen, zusätzliche individuelle Bedienelemente vorgesehen. Neben der Vielzahl von Bedienelementen, die Bauraum/Bedienfläche beanspruchen, ist diese Lösung für den Benutzer aufgrund der Unübersichtlichkeit schwierig und unsicher in der Handhabung. Sie ist auch in keiner Weise auf die besonderen Bedürfnisse des jeweiligen Benutzers zugeschnitten.

Der Erfindung liegt die Aufgabe zugrunde, ein Verfahren der eingangs genannten Art zu schaffen, bei der ein schneller, sicherer und auf die Bedürfnisse des jeweiligen Benutzers ausgerichteter Wechsel zwischen Menüpunkten verschiedener Auswahlmenüs ermöglicht wird. Ferner ist es Aufgabe der Erfindung, eine einfache Vorrichtung zur Realisierung des Verfahrens zu schaffen.

Die Erfindung löst diese Aufgabe für das Verfahren durch die Merkmale des Patentanspruchs 1, für die Vorrichtung durch die Merkmale des Patentanspruchs 5.

Die Erfindung besteht im wesentlichen darin, daß der jeweilige Menüpunkt, der bei Verlassen des jeweiligen Auswahlmenüs ausgewählt und damit aktiv war, beim erneuten Übergang zu diesem Auswahlmenü wieder aufgerufen wird. Unter Aufrufen zu verstehen ist eine direkte Aktivierung oder aber ein vorschlagsartiges Anwählen des Menüpunkts, das zur Aktivierung noch eine Bestätigungsoperation, z.B. wie an sich aus der EP 0366 555 A bekannt durch Axialbewegung des Betätigungsglieds, erfordert.

Beispiel: Im Auswahlmenü "Telefon" gibt es verschiedene Listen, mit denen Gesprächsteilnehmer selektiert werden können. Nutzer A bevorzugt z. B. die Top 8-Liste, also die Liste der 8 häufigst gewählten Teilnehmer, Nutzer B wählt seine Teilnehmer lieber aus der alphabetischen Liste. Die entsprechenden Menüpunkt "Top 8" oder "Wahl nach alphabetischer Liste" wurden also im Auswahlmenü "Telefon" selektiert.

Beide Nutzer wollen nun im Auswahlmenü "Audio" einen anderen Sender einstellen. Sie wechseln also aus dem Auswahlmenü "Telefon" in das Auswahlmenü "Audio", indem sie beispielsweise das Betätigungsglied wie in der WO 99/27435 A beschrieben, entsprechend neigen. Zum Einstellen eines anderen Senders bevorzugt Nutzer A den Menüpunkt "Liste der empfangbaren Stationen", Nutzer B den Menüpunkt "Liste der Stationstasten". Die jeweilige Liste wird auf einem Bildschirm dann als optische Auswahlhilfe zur Anzeige gebracht.

Anschließend oder nach weiteren Auswahlvorgängen bei anderen Auswahlmenüs soll wieder ein Telefongespräch geführt werden. Der erneute Wechsel in das Auswahlmenü "Telefon" ruft dieses Menü im selben Zustand auf, in dem es verlassen wurde, also in der jeweils bevorzugten Teilnehmerliste "Top 8" (Teilnehmer A) oder "Wahl nach alphabetischer Liste" (Teilnehmer B).

Beim Übergang zum Auswahlmenü "Audio" wurde selbstverständlich für jeden Nutzer der Menüpunkt eingestellt, aus dem heraus er dieses Auswahlmenü zuletzt verlassen hatte.

Auf diese Weise entsteht einfach durch die Nutzung der Auswahlmenüs eine Personalisierung der Menüstruktur. Es stehen dem Nutzer beim Übergang zum jeweiligen Auswahlmenü zunächst stets die Menüpunkte zur Verfügung, die er vorausgehend benutzt hatte. Die beschriebenen individuell gebildeten Menüstrukturen lassen sich auch personen- bzw. schlüsselabhängig speichern. Wird die Person des Benutzers z.B. an Hand seiner physiologischen Merkmale erkannt oder der individuelle Schlüssel benutzt, werden die hierzu gespeicherten Menüpunkte beim Einstellen des zugehörigen Auswahlmenüs eingestellt.

Weitere Beispiele für eine derartige Personalisierung sind:
Navigation: Automatischer Wechsel in die letzte Methode zur Zielführung (mit Pfeilen, mit Karte, mit/ohne Sprachausgabe)
Klimaeinstellungen: Automatischer Wechsel in einen Modus zum Abruf von Klimaprogrammen oder einen Modus zur individuellen Einstellung der Klimatisierung
Audio: Automatischer Wechsel in den Track-Modus bzw. in den CD-Selektionsmodus

Für den Aufruf eines Menüpunkts müssen deutlich weniger Eingabeschritte durchgeführt werden. Es genügt in der Regel, das zugehörige Auswahlmenü aufzurufen. Der zugehörige Menüpunkt wird dann aufgerufen. Dieser ist häufig der dann eigentlich auch gewünschte Menüpunkt Dadurch sinkt die Ablenkungszeit vom Verkehrsgeschehen und die Fahrzeugführung wird sicherer. Bei der Auswahl des Auswahlmenüs wird der bevorzugte Menüpunkt aufgerufen.

## Patentansprüche

1. Verfahren für Fahrzeuge zum Wechseln von einem Punkt innerhalb eines Auswahlmenüs zu einem anderen Punkt eines anderen Auswahlmenüs mit Hilfe eines Betätigungsglieds, wobei die Auswahlmenüs hierarchisch aus Menü, Teilmenüs, Funktion und/oder Funktionswert aufgebaut sind, wobei ein direkter Wechsel von einem Auswahlmenü zu einem anderen ermöglicht wird,
wobei jeweils der zuletzt benutzte Menüpunkt der Auswahlmenüs gespeichert wird,
wobei beim Übergang zum jeweiligen Auswahlmenü, insbesondere durch ein entsprechendes Neigen eines Betätigungsgliedes, jeweils zu dem Menüpunkt gewechselt wird, der bei der vorangegangenen Benützung dieses Auswahlmenüs als letzter ausgewählt war, **dadurch gekennzeichnet, daß**
die zuletzt benutzten Menüpunkte der Auswahlmenüs bei Abstellen des Fahrzeugs gespeichert werden und nach Inbetriebnahme des Fahrzeugs bei der erstmaligen Benutzung des Auswahlmenüs direkt ausgewählt werden.

2. Verfahren nach Anspruch 1, **dadurch gekennzeichnet,**
**dass** die zuletzt benutzten Punkte der Auswahlmenüs im Fahrzeug gespeichert werden.

3. Verfahren nach Anspruch 1 oder 2, **dadurch gekennzeichnet,**
**dass** die zuletzt benutzten Punkte der Auswahlmenüs in einem dem jeweiligen Benutzer zugeordneten Speicher festgehalten werden.

4. Vorrichtung nach Anspruch 3, **dadurch gekennzeichnet,**
**dass** der Speicher in einem Fahrzeugbetätigungselement enthalten ist.

## Claims

1. A method for vehicles to change from one point within a selection menu to another point of another selection menu with the aid of an actuating member, the selections menus being hierarchically constructed from menu, part menus, function and/or functional value, a direct change from one selection menu to another being made possible, the menu point used last of the selection menus being stored in each case, wherein on the transition to the respective selection menu, more especially by a corresponding tilting of an actuating member, a change is made in each case to the menu point which was selected last during the previous use of this selection menu, **characterised in that** the last used menu points of the selection menus are stored on turning off the vehicle and are directly selected after starting up the vehicle at the first use of the selection menu.

2. A method according to claim 1, **characterised in that** the last used points of the selection menus are stored in the vehicle.

3. A method according to claim 1 or 2 **characterised in that** the last used points of the selection menus are recorded in a memory associated with the respective user.

4. A device according to 3, **characterised in that** the memory is contained in a vehicle actuating element.

## Revendications

1. Procédé destiné à des véhicules pour passer, à partir d'un point dans un menu de sélection, à un autre point d'un autre menu de sélection à l'aide d'un organe d'actionnement,
les menus de sélection se composant de manière hiérarchique d'un menu, de parties de menu, de fonctions et/ou de valeurs de fonction, avec la possibilité de changement direct d'un menu de sélection à un autre, chaque fois le dernier point de menu utilisé dans le menu de sélection est mémorisé, et
au passage vers le menu de sélection, notamment en inclinant de manière appropriée un organe d'actionnement, on alterne vers le point du menu qui a été sélectionné en dernier lieu lors de la dernière utilisation de ce menu de sélection,
**caractérisé en ce que**
les points de menu utilisés en dernier lieu dans le menu de sélection sont enregistrés en mémoire lorsqu'on arrête le véhicule et, après remise en route du véhicule, ces points seront sélectionnés directement lors de la première utilisation du menu de sélection.

2. Procédé selon la revendication 1,
**caractérisé en ce que**
les points du menu de sélection utilisés en dernier lieu sont enregistrés en mémoire dans le véhicule.

3. Procédé selon la revendication 1 ou 2,
**caractérisé en ce que**
les points du menu de sélection utilisés en dernier lieu sont retenus de manière fixe dans la mémoire associée à chaque utilisateur.

4. Dispositif selon la revendication 3,
**caractérisé en ce que**
la mémoire est contenue dans un élément d'actionnement du véhicule.
